# EUROPÄISCHE PATENTANMELDUNG

(11) **EP 2 693 608 A1**
(43) Veröffentlichungstag der Anmeldung: **05.02.2014**
(21) Anmeldenummer: 12178427.6
(22) Anmeldetag: 30.07.2012
(51) Int. Cl.: H02K 3/24

(54) **Wicklung für eine elektrische Maschine**

(71) Anmelder: Siemens Aktiengesellschaft, 80333 München (DE)
(72) Erfinder: Kowalski, Waldemar, 45472 Mülheim an der Ruhr (DE); Lehmann, Christoph, 47506 Neukirchen-Vluyn (DE)

(57) **Zusammenfassung**

Die Erfindung betrifft eine Wicklung (1) für eine elektrische Maschine, wobei die Wicklung (1) mehrere übereinander angeordnete Leiterstäbe (2a, ..., 2e) aufweist, die mit Kühlschlitzen (6a, ..., 6f) derart ausgebildet sind, dass die Richtung der Strömungsführung für das Kühlungsmedium alterniert.

## Beschreibung

Die Erfindung betrifft eine Wicklung für eine elektrische Maschine, mit mehreren übereinander angeordneten Leiterstäben, wobei die Leiterstäbe einen in eine Tiefenrichtung ausgebildeten Kühlungsschlitz aufweisen.

Eine elektrische Maschine, wie beispielsweise ein Turbogenerator, ist aus der EP 1 742 330 A1 bekannt. Solch eine elektrische Maschine weist einen antreibbaren, drehbeweglich gelagerten Rotor, der auch Läufer genannt wird, und einen den Rotor umgebenden ortsfesten Stator auf. Der Rotor umfasst eine zylinderförmige Rotorwelle, die sich in Wellenlängsrichtung mittig zu einem Rotorballen verdickt. Der Rotorballen wird auch als Läuferballen bezeichnet. Auf dem Rotorballen ist eine mit einem Strom beaufschlagbare Erregerwicklung angeordnet. Der Stator weist eine Statorwicklung auf. Zur Erzeugung von elektrischer Energie ist die Rotorwelle mit einem Antrieb, insbesondere mit einer Antriebswelle einer Turbine, gekoppelt. Auf diese Weise lässt sich der Rotor in eine Drehbewegung gegenüber dem ortsfesten Stator versetzen. Wird dabei die Rotorwicklung von einem Strom durchflossen, so wird ein magnetisches Drehfeld erzeugt, das in der Statorwicklung eine elektrische Spannung induziert. Turbogeneratoren können eine elektrische Leistung zwischen 100 MW und 1500 MW erzeugen.

Es ist des Weiteren bekannt, den Zylindermantel des Rotorballens mit in Wellenlängsrichtung verlaufenden und in Umfangsrichtung zueinander beabstandeten Nuten zu versehen und die Erregerwicklung in diesen Nuten anzuordnen. In den Nuten sind dazu eine Mehrzahl von in Wellenlängsrichtung verlaufenden und gegeneinander isolierten Leiterstäben übereinander gestapelt. Zur Zylindermantelfläche des Rotorballens hin ist ein in eine Profilierung eingeschobener Nutverschlusskeil zum Absichern der Leiterstäbe gegen die bei der Umdrehung des Rotors herrschenden Fliehkräfte vorgesehen. Bei einem Turbogenerator besteht das Bestreben, eine möglichst hohe elektrische Leistung zu erreichen. Die erreichbare elektrische Leistung eines Turbogenerators hängt u. a. von der Magnetfeldstärke des magnetischen Drehfeldes ab, das von der Erregerwicklung des Rotors erzeugt wird. Je höher die Magnetfeldstärke, desto höher ist entsprechend die elektrische Leistung des Turbogenerators.

Da die Leiterstäbe im Betrieb durch die elektrischen Ströme stark erwärmt werden, müssen sie gekühlt werden. Dazu ist es bekannt, die Leiterstäbe mit Luft, Gas oder Wasser zu kühlen. Dabei werden die aus einem leitfähigen Material, insbesondere Kupfer ausgebildeten Leiterstäbe mittels Bohrungen versehen, wobei durch diese Bohrungen ein Kühlungsmedium strömt. Es sind radial ausgerichtete und auch axial ausgerichtete Kühlungspfade in den Leiterstäben bekannt. Beispielsweise werden Kühlungspfade in axialer oder radialer Richtung derart ausgebildet, dass in die übereinander angeordneten Leiterstäbe ein Schlitz eingefräst wird, durch die ein Kühlungsmedium strömen kann. Damit der Wärmeübertrag möglichst groß ist, werden diese Schlitze gestuft ausgeführt, damit an der Stufe eine Verwirbelung des Kühlmediums stattfindet und somit der Wärmeübergangskoeffizient erhöht wird, was zu einer besseren Kühlung führt.

Es ist Aufgabe der Erfindung, eine Wicklung mit einer verbesserten Kühlungsmöglichkeit anzugeben.

Gelöst wird diese Aufgabe durch eine Wicklung für eine elektrische Maschine mit mehreren übereinander angeordneten Leiterstäben, wobei die Leiterstäbe jeweils einen in eine Tiefenrichtung ausgebildeten Kühlungsschlitz aufweisen, wobei die Kühlungsschlitze unter einem Winkel α der zwischen 10° und 80° liegt ausgebildet ist, wobei der Winkel α zwischen einer radialen Richtung des Leiterstabes und des Kühlungsschlitzes gebildet ist.

Vorteilhafte Weiterbildungen sind in den Unteransprüchen angegeben.

Die Erfindung geht von dem Gedanken aus, dass eine Verbesserung der Kühlung möglich ist, wenn die Kühlkanäle nicht wie bisher in radialer oder axialer Richtung geradlinig ausgebildet sind, sonder vielmehr diagonal ausgebildet werden. Darunter ist zu verstehen, dass in einem Leiterstab der Kühlungsschlitz nicht in radialer Richtung zeigt, sondern unter einem Winkel α zur radialen Richtung ausgebildet ist. Dieser Winkel weist Werte zwischen 10° und 80° auf. Erfindungsgemäß wird über dem als solch ausgebildeten Leiterstab ausgeführten Kühlungsschlitz ein weiterer Leiterstab angeordnet, der ebenfalls einen Kühlungsschlitz aufweist, der diagonal ausgebildet ist, wobei dieser diagonal ausgeführte Kühlungsschlitz einen im mathematischen Sinne alternierenden Winkel α aufweist. Das bedeutet, dass die Kühlungsschlitze von übereinanderliegenden Kühlrotorleitern im Querschnitt gesehen einen zickzackförmigen Verlauf aufweisen.

Die Erfindung wird anhand eines Ausführungsbeispiels näher erläutert.

Es zeigen:
- FIG 1: eine Querschnittsansicht der erfindungsgemäßen Anordnung der Leiterstäbe;
- FIG 2: eine Querschnittsansicht der am Nutgrundkanal ausgeführten erfindungsgemäßen Anordnung der Leiterstäbe;
- FIG 3: eine im Nutkopfteil angeordnete Ausführung der Leiterstäbe.

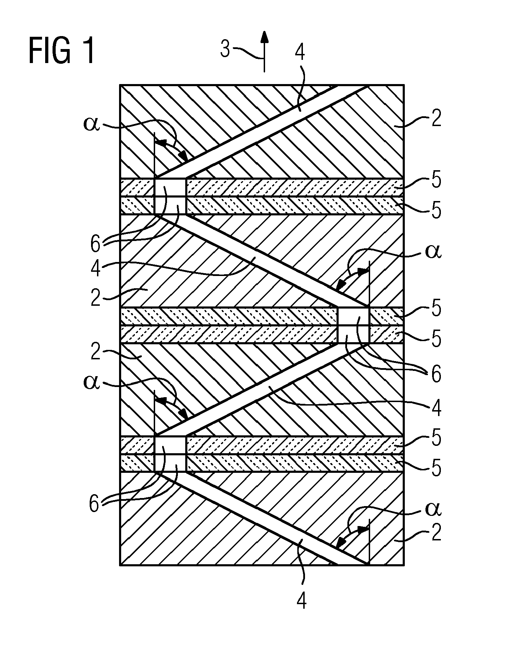

Die FIG 1 zeigt einen Teil einer Wicklung 1 einer nicht näher dargestellten elektrischen Maschine. Diese Wicklung 1 umfasst mehrere übereinander angeordnete Leiterstäbe 2. Diese mehrere übereinander angeordneten Leiterstäbe 2 werden mit einem Strom in Blattrichtung, d. h. in einer senkrecht zur Blattebene verlaufenden Linie geführt. Die Wicklung 1 rotiert um eine nicht näher dargestellte Rotationsachse. Aus anschaulichen Gründen wird durch den Pfeil 3 die Fliehkraft symbolisiert. Die Fliehkraft wirkt in der Richtung des Pfeils 3 und zeigt außerdem die radiale Richtung an. Der Leiterstab 2 weist in einer Tiefenrichtung, die in Richtung des Pfeils 3 führt, einen Kühlungsschlitz 4 auf, durch den im Betrieb ein Kühlungsmedium strömt. Zwischen den Leiterstäben 2 sind Isolationsstreifen 5 angeordnet, die jeweils einem Leiterstab 2 zugeordnet sind. Die Kühlungsschlitze 4 werden so herausgeführt, dass sie nicht parallel zum Pfeil 3, also in radialer Richtung ausgebildet sind, sondern um einen Winkel α, der Werte zwischen 10° und 80° aufweisen kann, geneigt ausgeführt. Der Winkel α wird hier zwischen dem Kühlungsschlitz 4 und dem Pfeil 3 ermittelt. Der Winkel α kann Werte zwischen 10° und 80° aufweisen. Der Anfangswert von 10° kann einen beliebigen Wert zwischen 10° und 79° aufweisen. Der Endwert von 80° kann einen beliebigen Wert zwischen 11° und 80° aufweisen. Dazwischen sind alle beliebigen Intervalle möglich. Beispielhaft wurde hier der Grenzbereich von 10° bis 80° als Ausführungsform gewählt. Die Isolationsstreifen 5 weisen an den Übergängen der Leiterstäbe Durchtrittsöffnungen 6 auf. Das Kühlungsmedium kann daher in einem zickzackförmigen Verlauf durch die Wicklung geführt werden.

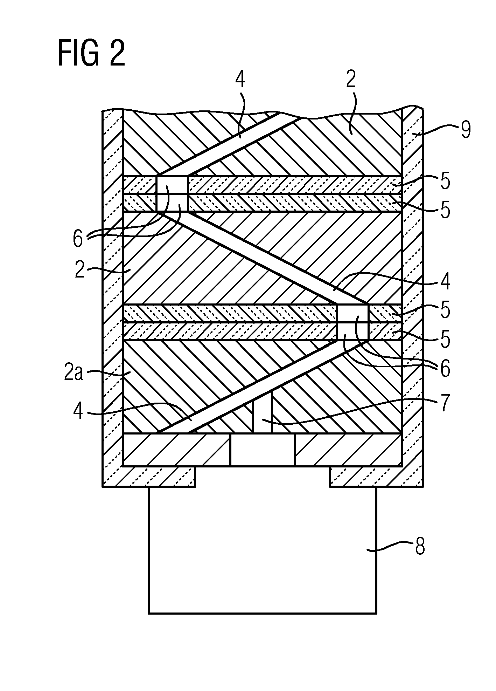

Die FIG 2 offenbart die Wicklung im Bereich des Nutgrundkanals 8. Das bedeutet, dass der unterste Leiterstab 2a einen senkrecht zur Gasführungsbohrung ausgeführten Zuführkanal 7 aufweist, dieser Zuführkanal 7 wird über einen Nutgrundkanal 8 mit dem Strömungsmedium versorgt und kühlt, wie oben dargestellt, die Wicklung 1 ab. Um die Leiterstäbe 2 ist eine weitere Isolation 9 ausgeführt.

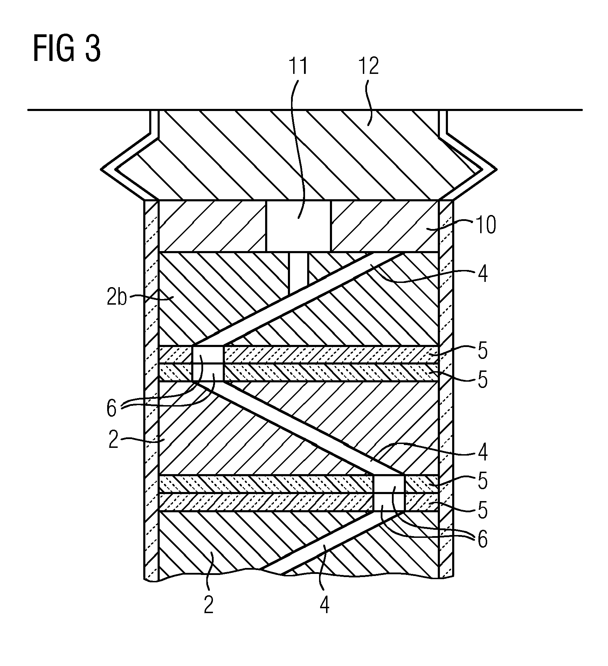

Die FIG 3 zeigt eine Ausführung der Wicklung 1 im Nutkopfbereich. Oberhalb des letzten Leiterstabs 2b ist eine Nutkopfleiste 10 mit einer senkrecht ausgeführten Austrittsöffnung 11 ausgebildet. Durch diese Austrittsöffnung 11 strömt schließlich das Kühlungsmedium aus der Wicklung 1 heraus. Um die Leiterstäbe 2 gegen Fliehkraft zu sichern, ist ein Nutverschlusskeil 12 angebracht. Werden diese Leiterstäbe 2 übereinander angeordnet, so strömt Kühlgas aus dem Nutgrundkanal 8 kommend in den untersten Leiterstab 2a und von diesem von links unten nach rechts oben und anschließend in den darüberliegenden Leiterstab 2 und in diesem von rechts unten nach links oben. Diese Anordnung wiederholt sich nun einige Male, bis das Kühlmedium an der Rotoroberfläche durch den Nutverschlusskeil 12 in den Luftspalt austritt. Zwischen den Leiterstäben 2 liegen die Isolationsstreifen 5, die genau an der Stelle angeordnet sind, an der das Kühlgas aus dem unteren Leiter 2a austritt und in die darüberliegende Kühlbohrung eintritt. Die Bohrungsdurchmesser der Kühlungsschlitze 4 in den einzelnen Leiterstäben 2 sollen dabei von unten nach oben in der Nut von Leiterstab 2 zu Leiterstab 2 zunehmen, was in den Figuren nicht dargestellt ist, so dass die Kühlungsoberflächen der Leiterstäbe 2 entsprechend anwachsen. Hierdurch wird eine Vergleichmäßigung der Leitertemperaturen in der Nut erreicht. Die Kühlgasschlitze 4 können kreisförmig oder oval ausgebildet sein. Durch die schräge Anordnung der Kühlungsschlitze 4 in den Leiterstäben entsteht eine vergrößerte Oberfläche zur Leiterkühlung. Wegen der verbesserten Kühlung kann der Strom in den Leiterstäben 2 erhöht und damit die Ausnutzung des Rotors gesteigert werden.

## Patentansprüche

1. Wicklung (1) für eine elektrische Maschine, mit mehreren übereinander angeordneten Leiterstäben (2),
wobei die Leiterstäbe (2) jeweils einen in eine Tiefenrichtung ausgebildeten Kühlungsschlitz (4) aufweisen,
**dadurch gekennzeichnet, dass**
die Kühlungsschlitze (4) unter einem Winkel α, der zwischen 10° und 80° liegt, ausgebildet ist,
wobei der Winkel α zwischen einer radialen Richtung (3) des Leiterstabs (2) und des Kühlungsschlitzes (4) gebildet ist.

2. Wicklung (1) nach Anspruch 1,
wobei der Kühlungsschlitz (4) in einem Leiterstab (2) unter dem Winkel α ausgebildet ist.

3. Wicklung (1) nach Anspruch 1 oder 2,
wobei die Kühlungsschlitze (4) von zwei übereinander angeordneten Leiterstäben (2) einen im mathematischen Sinne alternierenden Wechsel des Winkels α aufweisen.

4. Wicklung (1) nach einem der vorhergehenden Ansprüche,
wobei zwischen den Leiterstäben (2) Isolierstreifen mit Durchtrittsöffnungen für die Kühlungsschlitze (4) angeordnet sind.
